# EUROPEAN PATENT SPECIFICATION

(11) **EP 2 644 317 B1**
(45) Date of publication and mention of the grant of the patent: **21.11.2018**
(21) Application number: 12002233.0
(22) Date of filing: 28.03.2012
(51) Int. Cl.: B23Q 3/155, B23B 41/00, B23Q 1/62

(54) **Section member drilling or milling machine**
Abschnittsbohr- oder Fräsmaschine
Machine de perçage et de fraisage d'élément de section

(43) Date of publication of application: 02.10.2013
(73) Proprietor: FICEP S.P.A., 21045 Gazzada Schianno (IT)
(72) Inventor: Pirovano, Alessandro, 21034 Cocquio Trevisago (IT)
(74) Representative: Mayer, Hans Benno

(56) References cited:
- EP-A1- 1 151 813
- NL-A- 8 101 080

## Description

### BACKGROUND OF THE INVENTION

The present invention relates to a section member drilling or milling machine according to the preamble of claim 1 (see EP 1 151 813A1).

As it is known in the prior art, parallel sides of section members, having for example a double-T shape, are drilled in a controlled and very accurate manner, for assembling the section members to other section members to provide, by a bolted connection, a desired construction.

In the prior art a support is also known supporting a drilling, respectively a milling, unit, the support being adapted to slide along sliding guides having a comparatively large extension and arranged parallel to the section member being drilled.

This prior sliding support comprises moreover parallel guides therealong the drilling and milling unit is controllably driven in a vertical plane.

A drawback of the above prior device is that the support assembly has a comparatively large weight and, accordingly, its sliding movement on the horizontal guides, having a comparatively large length, requires a substantial effort and, moreover, a large time and, in addition, the drilling, respectively milling tool precision is not always satisfactory.

In addition, because of the prior milling device inertia, it is not possible to engrave in the section member body symbols such as trademarks or alphanumeric wordings, for facilitating, for example, the end section member assembling step.

### SUMMARY OF THE INVENTION

Accordingly, the object of the present invention is to overcome the above mentioned prior art drawbacks and provide a novel section member drilling, respectively milling machine allowing the drilling or milling tool to be driven, with a controlled high speed movement, both in a vertical and in a horizontal driving plane.

According to the invention, the above object is achieved by a section member drilling or milling machine as defined in claim 1.

### BRIEF DESCRIPTION OF THE DRAWINGS

Further characteristics and advantages of the present invention will become more apparent hereinafter from the following description, dependent claims and accompanying drawings.

The subject matter according to the present invention will be hereinafter disclosed in a more detailed manner with reference to the accompanying drawings, where:
Figure 1 is a perspective view showing the drilling and milling machine;
Figure 2 is a front detail view showing the machine slidable support, including vertically arranged guides and an assembly to be controllably driven along auxiliary horizontal guides.

### DESCRIPTION OF THE PREFERRED EMBODIMENT

The section member drilling or milling machine comprises a machine bed 2, thereon a double-T shape section member P to be machined is arranged.

The machine bed comprises a longitudinal guide 3, for controllably sliding thereon, as indicated by the arrow (f), a support generally indicted by 4.

The support 4 supports a cantilever arm 5, horizontally projecting from said support 4, said arm slidably supporting a drilling, respectively milling tool 6, which is driven by a tool driving motor 7.

The sliding support 4 comprises precision vertical guides 8 therealong is controllably driven, in the direction shown by the double arrow (g), a platform 9, said platform 9 comprising parallel horizontal guides 10 slidably supporting a carriage 11, which in turn supports the cantilever arm 5 together with the tool 6 driving motor 7.

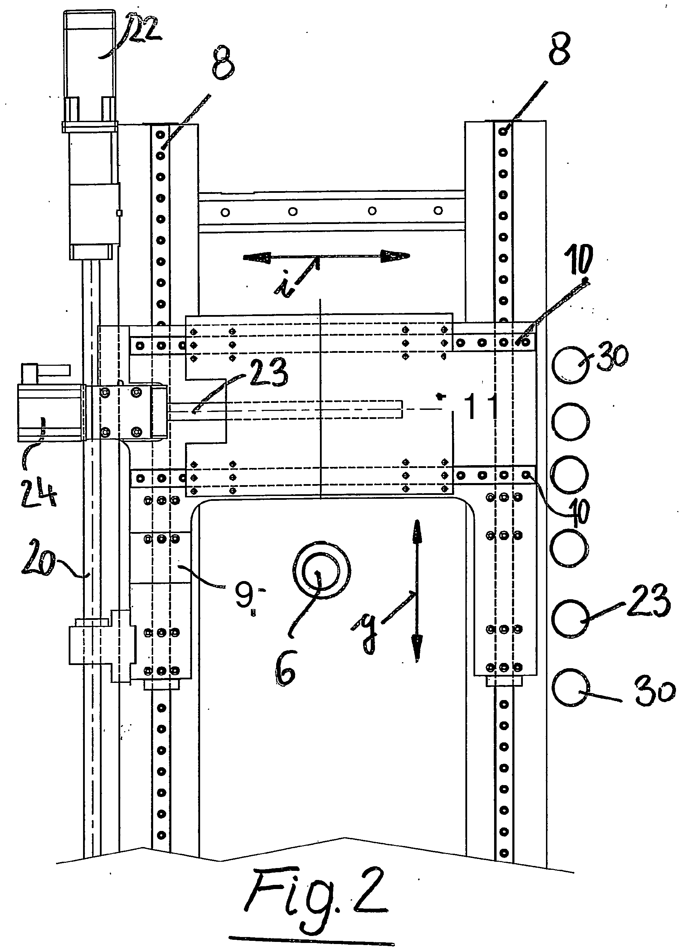

The above disclosed device is shown by a schematic top plan view in figure 2.

It is possible to see in this figure the two parallel guides 8 arranged in a vertical plane allowing the platform 9 to perform a controlled movement in a vertical plane as indicated by the double arrow (g).

To perform this controlled movement (g), the platform 9 is operatively connected to a precision screw 20, driven by a controllable motor 22 which is in turn operatively connected to a numerical control unit of the drilling and milling machine 1.

The platform 9 supports moreover said horizontal guides 10 which in turn slidably support the carriage 11, operatively connected to a precision screw 23 driven by a further controllable motor 24 also operatively connected to a conventional machine numerical control unit.

Thus, through said screw 23, the carriage 11 is controllably driven, with a maximum precision for short lengths, in the two directions shown by the double arrow (i).

On a side, and advantageously in parallel to the right guide 8, as is shown in figure 2, a magazine 23 including storing seats or recesses for storing several tools 6, to be used in the inventive machine for performing several machining operations on the workpiece 1, is provided.

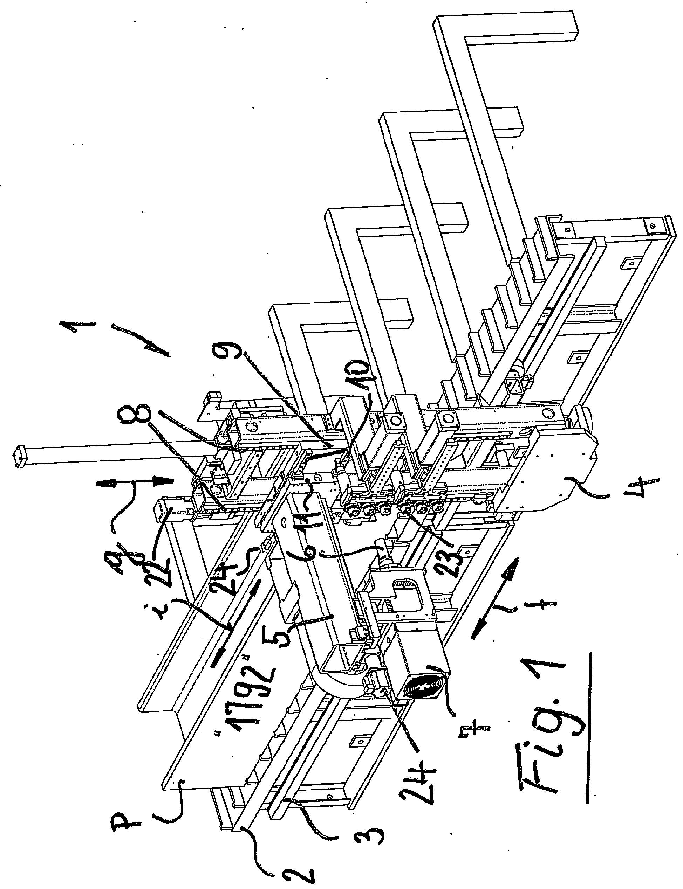

Thus, on said support 4, coarse movements may be performed along the horizontal guide 3, whereas, by the carriage 11 controllably slidably driven along the guides 10 of the platform 9, precision movements controlled by the driving motor 24 will be performed, thereby allowing to draw on the section member P trademarks or alphanumeric reference marks shown, for example in figure 1 by the digits "1792".

## Claims

1. A section member drilling or milling machine, comprising a machine bed (2) for supporting a workpiece (P) to be drilled, said machine bed (2) including guides (3) for controllably sliding thereon a support (4), said support (4) comprising precision vertical guides (8) thereon a platform (9) is engaged, wherein said platform (9) comprises parallel horizontal guides (10) slidably supporting a carriage (11), said carriage supporting in turn a cantilever arm (5) including a driving motor for controllably driving a drilling and milling tool (6) along parallel guides of said cantilever arm (5),
**characterized in that** said carriage (11) is operatively connected to a precision screw (23) driven by a controllable motor (24), said platform (9) is operatively connected to a precision screw (20), driven by a controllable motor (22), and **in that** said precision vertical guides (8) comprise a right precision vertical guide (8) therewith a magazine (30) storing therein drilling and milling tools to be selected for use with the motor-tool assembly (6, 7) is engaged.

## Patentansprüche

1. Abschnittsbohr- oder Fräsmaschine, die ein Maschinenbett (2) zur Lagerung eines zu bohrenden Werkstückes (P) umfasst, das Maschinenbett (2) umfasst Führungen (3), um eine angesteuerte Verschiebung auf den Träger (4) durchzuführen, der Träger (4) umfasst vertikale Feinführungen (8), auf die eine Plattform (9) eingreift, wobei diese Plattform (9) parallel horizontale Führungen (10) umfasst, die ein Laufwerk (11) verschiebbar lagern, dieses Fahrwerk trägt wiederum einen Konsolenarm (5), der einen Antriebsmotor zur angesteuerten Steuerung eines Bohr- und Fräswerkzeuges (6) entlang paralleler Führungen des Konsolenarms (5) umfasst, **dadurch gekennzeichnet, dass** das Laufwerk (11) in Wirkverbindung mit einer vom Antriebsmotor (24) angesteuerten Feinschraube (23) ist, dass diese Plattform (9) in Wirkverbindung mit einer vom Antriebsmotor (22) angesteuerten Feinschraube (20) ist, und dass diese vertikalen Feinführungen (8) eine rechte vertikale Feinführung (8) umfasst, womit ein Lager (30) zum Lagern der Bohr- und Fräswerkzeuge, die zur Verwendung mit der Motor-Werkzeuggruppe (6, 7) ausgewählt werden, eingreift.

## Revendications

1. Machine de perçage et de fresage d'élément de section comportant un lit (2) de la machine pour supporter une pièce (P) à percer, le lit (2) de la machine comportant des guides (3) pour couler d'une façon contrôlée un support (4) sur les-dites guides, le support (4) comportant des guides (8) verticales de précision sur lui est engagé une plate-forme (9), où la plate-forme (9) comporte des guides (10) verticales horizontales qui supportent en coulant un chariot (11), le chariot support égalment un bras (5) de cantilever comportant un moteur d'entraînement pour guider d'une façon contrôlée et un outil (6) de perçage et de fresage le long de guides parallèles du bras (5) de cantilever, **caractérisée en ce que** le chariot (11) est raccordé au niveau operationnel avec une vis (23) de précision actionnée par un moteur (24) contrôlable, la plate-forme (9) est raccordée au niveau opérationnel avec une vis (20) de précision contrôlée par un moteur (22) contrôlable, et **en ce que** le guides (8) verticales de précision comportent une guide (8) verticale de précision droite avec laquelle un entrepôt (30) est engagé et qui entrepose les outils de perçage et de fresage à selectionner pour l'utilisation avec le groupe (6, 7) du moteur et de l'outil.
